# EUROPEAN PATENT APPLICATION

(11) **EP 2 343 853 A1**
(43) Date of publication of application: **13.07.2011**
(21) Application number: 10290003.2
(22) Date of filing: 07.01.2010
(51) Int. Cl.: H04L 12/14

(54) **Method and system for dynamically controlling the quality of service**

(71) Applicant: Alcatel Lucent, 75008 Paris (FR)
(72) Inventor: Gardella, Maryse, 91620 Nozay (FR); Cuervo-Carrillo, Jorge Fernando, K2K 2E6 Ottawa (CA); Levy, Thomas, Route de Villejust 91620 Nozay (FR)
(74) Representative: Croonenbroek, Thomas Jakob

(57) **Abstract**

The invention relates to a method for dynamically controlling the quality of services attributed for the communication session of a user equipment (UE) in a 3GPP compliant communication network, comprising the steps of:
-initiating a communication session;
-an online charging system (OCS) detects an event (302) on the account of the user and decides that this event shall induce a change of parameters of the quality of service;
-the online charging system sends (303) a change of quality of service instruction to be applied after the consumption of the final granted units or immediately, to a policy control enforcement function (PCEF);
-the policy control enforcement function (PCEF.) forwards said request to a policy and charging rules function (PCRF), once final units are exhausted;
- said policy and charging rules function (PCRF) derives modified policy charging and control rules from instruction for a change of quality of service within the session;
-said policy control enforcement function (PCEF) receives and applies said policy charging and control rules.

## Description

The present invention relates to billing a subscriber for content delivered over a network, more specifically over a mobile communication network.

Networks of general purpose computer systems and specialized devices connected by external communication links are well known and widely used in commerce. The networks often include one or more network devices that facilitate the passage of information between the computer systems and devices. A network node is a network device or computer or specialized device connected by the communication links. An end node is a network node that is configured to originate or terminate communications over the network. An intermediate network node facilitates the passage of data between end nodes.

Subscribers obtain access to a packet-switched network (PSN) of an Internet Service Provider (ISP) through a network access gateway. The network access gateway determines whether an entity attempting access is in fact a subscriber authorized to access the network by exchanging packets with an Authentication, Authorization, and Accounting (AAA) server.

A modern ISP can offer different services to different subscribers.. Network quality of service refers to techniques for providing different treatment for different flows of data packets between a subscriber's end node and a remote end node reached through the ISP's network. Rather than forwarding all packets of all flows with the same best effort, some flows receive preferential treatment in terms of more bandwidth, guaranteed minimum bandwidth, shorter delays, less variability in arrival time (such variability is called jitter) or less noise, or other benefits, alone or in some combination. An intermediate network node that provides network quality of service keeps statistics used for allocating forwarding resources for various flows.

Communications between network nodes are typically effected by exchanging discrete packets of data. Information is exchanged within data packets according to one or more of many protocols. In this context, a protocol consists of a set of rules defining how the nodes interact with each other based on information sent over the communication links. Each packet typically comprises header information associated with a particular protocol, and payload information that follows the header information and contains information that may be processed independently of that particular protocol. The header includes information used by the protocol, such as the source of the packet, its destination, the length of the payload, and other properties, depending on the protocol. Often, the data in the payload for the particular protocol includes a header and payload for a different protocol associated with a different layer of detail for information exchange. The header for a particular protocol typically indicates a type for the next protocol contained in its payload. The usually higher layer protocol in the payload is said to be encapsulated in the lower layer protocol in the header.

The headers included in a packet traversing multiple heterogeneous networks, such as the Internet, typically include a physical (layer 1) header, a data-link (layer 2) header, an internetwork (layer 3) header and a transport (layer 4) header, as defined by the Open Systems Interconnection (OSI) Reference Model.

The data-link header provides information defining a particular communication link between one network node and an adjacent node. The internetwork header provides information defining the source and destination address within the computer network. Notably, the path may span multiple physical links. The internetwork header may be formatted according to the Internet Protocol (IP), which specifies IP addresses of both a source and destination node at the end points of the logical path. Thus, the packet may "hop" from node to node along its logical path until it reaches the end node assigned to the destination IP address stored in the packet's internetwork header. After each hop, the source or destination addresses in the packet's data-link header may be updated, as necessary. However, the source and destination IP addresses typically remain unchanged as the packet is transferred from link to link in the network. The IP payload often includes data for an application (layer 7 header and payload).

Routers and switches are intermediate network nodes that determine which communication link or links to employ to support the progress of data packets through the network. An intermediate network node that determines which links to employ based on information in the internetwork header (layer 3) is called a router.

These principles also apply to mobile communication networks. Mobile communication networks have been developed to provide a dynamic combination of voice, video, messaging, data, etc. within the same session. The IP Multimedia Subsystem (IMS) is the technology defined by the Third Generation Partnership Project (3 GPP) to provide IP Multimedia services over mobile communication networks.

The IMS makes use of the Session Initiation Protocol (SIP) to set up and control calls or sessions between user terminals or user equipments (UE) (or user equipments and application servers). The Session Description Protocol (SDP), carried by SIP signaling, is used to describe and negotiate the media components of the session. Whilst SIP was created as a user-to-user protocol, IMS allows operators and service providers to control user access to services and to charge users accordingly.

Control of communications occurs at three layers. The lowest layer is the Connectivity Layer, also referred to as the bearer plane and through which signals are directed to/from user equipments accessing the network. The GPRS network includes various GPRS Support Nodes (GSNs). A gateway GPRS support node (GGSN) acts as an interface between the GPRS backbone network and other networks (radio network and the IMS network or other Operator's IP services infrastructure). The Systems Architecture Evolution (SAE) Network includes various Evolved Packet Core (EPC) Nodes. A PDN gateway node (P-GW) acts as an interface between the EPC backbone network and other networks.

The IMS includes a core network, which operates over the middle, Control Layer and the Connectivity Layer, and a Service Network. The IMS core network includes nodes that send/receive signals to/from the GPRS network via the GGSN at the Connectivity Layer and network nodes that include Call/Session Control Functions (CSCFs), which operate as SIP proxies within the IMS in the middle, Control Layer. The 3GPP architecture defines three types of CSCFs: the Proxy CSCF (P-CSCF) which is the first point of contact within the IMS for a SIP terminal; the Serving CSCF (S-CSCF) which provides services to the user that the user is subscribed to; and the Interrogating CSCF (I-CSCF) whose role is to identify the correct S-CSCF and to forward to that S-CSCF a request received from a SIP terminal via a P-CSCF.

At the top is the Application Layer, which includes the IMS service network. Application Servers (ASs) are provided for implementing IMS service functionality. Application Servers provide services to end-users, and may be connected either as endpoints, or "linked in" by an S-CSCF.

The IMS architecture makes it possible to deploy peer-to-peer applications where two or more users exchange data during a SIP session. Examples of such peer-to-peer applications include Multimedia Telephony (MMTeI), Push to Talk over Cellular (PoC), streaming, real-time video sharing, file sharing, gaming etc. The transport connection is negotiated dynamically by means of the SIP/SDP protocol exchange between the two end points (user equipments).

In order to support such peer-to-peer applications, there are two requirements: a mechanism is needed to selectively control the SIP signal flows associated with the IMS session of a subscriber; and a functionality is needed to control the IP flows through the dynamically negotiated transport connections in order to apply an effective charging for usage of services. One important aspect concerns the resources required for the session, which will impact on the different Quality of Service (QoS) provided for the session (e.g. the data rate at which data is transferred between the end users). In the discussion below the term QoS is used to refer to those parameters of a requested or on-going session that determine the Quality of the session Service experienced by the end user. Though not the only one, the principal bearer resource characteristic affecting QoS is the available bandwidth for the session.

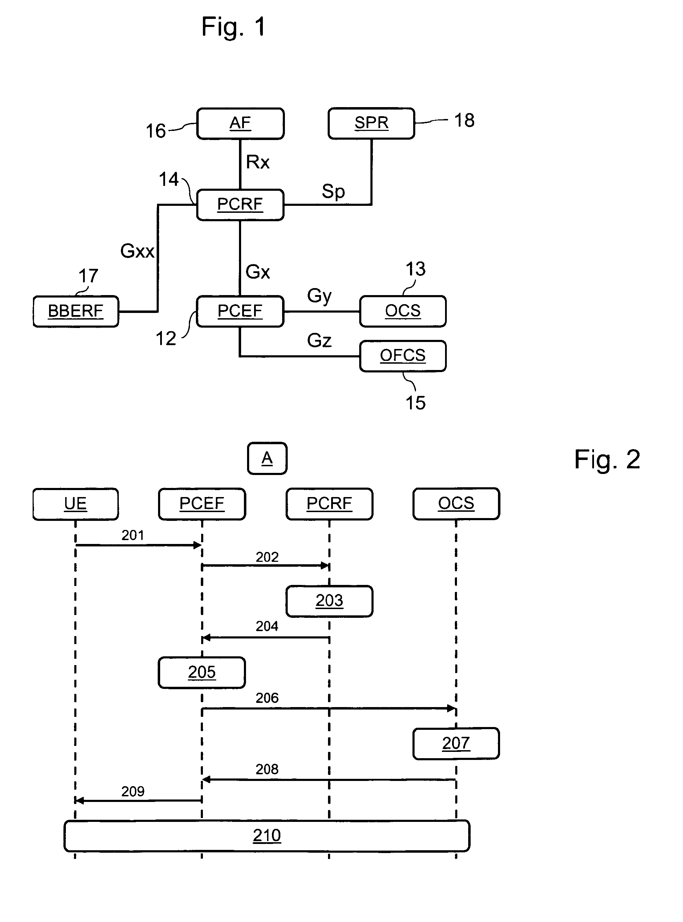

3GPP has recognized such needs and has defined a Policy and Charging Control (PCC) Architecture (see 3GPP TS 23.203). Figure 1 presents the basic outline of the PCC architecture. The Application Function (AF) 16 is an element offering applications that require dynamic policy and/or charging control of traffic plane resources. Although the application services are initiated and service characteristics are negotiated at the Application Layer, in the case of the IMS the P-CSCF plays the role of the AF 16 at the SIP signaling plane (Control Layer). A Policy and Charging Enforcement Function (PCEF) 12 in the Connectivity Layer monitors service data flow and enforces network policy on the user plane traffic. The PCEF 12 also applies charging based on the monitored data flow and the charging policy applied. This information is provided to an Online Charging System 13 over the Gy interface and/or to an Offline Charging System (OFCS) 15 for consolidating charging records in an offline fashion. Within a GPRS Network, the PCEF 12 is located in the GGSN. Within the Systems Architecture Evolution defined in 3GPP Release 8, the PCEF is located in the PDN gateway.

A Policy and Charging Rules Function (PCRF) 14 resides in between the AF 16 and the PCEF 12. The PCRF 14 is the entity that controls policies and charging based on the monitored data flow. The PCRF 14 determines rules for charging and policies to be applied for a particular subscriber, by retrieving information over the Sp interface from a Subscription Profile Repository (SPR) 18, which includes a database of subscriber information. The PCRF 14 installs these PCC rules at the PCEF 12 over the Gx interface. These ensure that only authorized media flows associated with the requested services are allowed. In addition, the PCC rules installed at the PCEF 12 ensure that the right Qos, charging and priority are applied through the right bearer. Therefore, the PCRF 14 receives input from a Bearer Binding and Event Reporting Function BBERF 17 over the Gxx interface.

Once session characteristics are negotiated between the communication peers and the session characteristics are authorized within the AF (e.g IMS Core Network...), the AF 16 provides to the PCRF 14 input over the Rx interface so that the corresponding resource reservation can be performed at the Connectivity Layer.

In practice, the PCRF interacts with other functions for its policy decisions. Based on inputs mainly related to the requested service, the network capability and user's subscription, the PCRF derives the Qos and the corresponding bandwidth to be applied.

Many events can trigger PCC decisions inducing Qos or bandwidth changes (for instance service description or Radio Access Technology change).

In case a user account has insufficient credits or when the account is refilled (respectively identified by the events OUT-OF-CREDIT and REALLOCATION_OF_CREDIT), the PCC has no means to dynamically change the Qos or bandwidth. In case the user account has insufficient credits, the PCC usually carries out a drastic session cut off, which is particularly annoying for the end users, when a simple Qos downgrading would be more appropriate. In case the user has refilled his account after a session was opened in downgraded mode, this refill does not lead to a dynamic improvement of the Qos or bandwidth. There is no suitable solution available for solving this technical problem.

Several propositions are being discussed in order to overcome these drawbacks. It has been proposed to interface the OCS with the PCRF, in order to dynamically change the Qos/bandwidth further to a billing event. Another proposal was to interface the OCS with the PCRF through the SPR, in order to dynamically change relevant user data for this Qos/bandwidth change. Another proposal was to integrate a combination of the OCS and PCRF functionalities in a single system. These propositions present drawbacks. These propositions either require a lengthy standardization process or are simply not appropriate for a great number of cases.

There is thus a need for a corresponding Qos control method overcoming these drawbacks.

The invention relates to a method for dynamically controlling the quality of service attributed for the communication session of a user equipment in a 3GPP compliant communication network, comprising the steps of:
- initiating a communication session on said communication network;
- an online charging system of said network decides that a change of parameters of the quality of service attributed to the user shall take place;
- the online charging system sends a change of quality of service instruction to be applied, to a policy control enforcement function of said network;
- the policy control enforcement function forwards said instruction to a policy and charging rules function of said network;
- said policy and charging rules function derives modified policy charging and control rules from forwarded instruction for change of quality of service within the session ;
- said policy control enforcement function receives and applies said modified policy charging and control rules for said session.

In an embodiment, the online charging system detects an event on the account of the user of said session, said decision step being triggered by the detection step.

Said detected event can be that the user's account is inferior to a predetermined threshold, and said instruction is a request for downgrading the quality of service within the session.

The online charging system can grant credit units remaining on said user's account to said policy control enforcement function along with the sending of the change of quality of service instruction to be applied after the consumption of the final granted units.

Said policy control enforcement function may forward said instruction only once the granted credit units are exhausted.

According to another embodiment, said detected event is a replenishing of the user's account, and said instruction is a request for upgrading the quality of service within the session.

The online charging system may request said policy control enforcement function to re-authorize for current quota, before sending said change of quality of service instruction to it.

The change of quality of service instruction is preferably sent on a Gy interface between the OCS and the PCEF.

The change of quality of service instruction is preferably forwarded on a Gx interface between the PCEF and the PCRF.

The invention also relates to a system for a 3GPP compliant communication network, comprising:
- an online charging system adapted to decide that a change of parameters of the quality of service attributed to the user should take place, and adapted to send a change of quality of service instruction;
- a policy and charging rules function adapted to derive modified policy charging and control rules from instruction sent by the online charging system, for a change of quality of service within the session;
- a policy control enforcement function having a communication interface with the policy and charging rules function and having a communication interface with the online charging system, said policy control enforcement function being adapted to receive a change of quality of service instruction from the online charging system and to forward it to said policy and charging rules function, and adapted to receive and apply modified policy charging and control rules sent by the policy and charging rules function in order to provide the quality of service attributed within an ongoing communication session of said user.

In an embodiment, the online charging system is adapted to detect an event on the account of the user of said session, and adapted to decide said change of parameters based on the detection step.

The advantage of the present invention will become apparent from the following description of several embodiments with reference to the accompanying drawings, in which:
- Figure 1 illustrates a schematic outline of a PCC architecture;
- Figure 2 to 4 are illustrations of signal flows between a UE and PCC entities in accordance with embodiments of the invention.

The invention proposes to dynamically control the quality of service attributed for the communication session of a user equipment in a 3GPP compliant communication network. During the communication session, the online charging system detects an event on the account of the user of the session. The online charging system decides that this event has to induce a change in the parameters of the applied quality of service. The online charging system sends a change of quality of service instruction to be applied, to a policy enforcement function. This policy enforcement function forwards the request to a policy and charging rules function. The policy and charging rules function then derives modified policy charging and control rules from forwarded instruction for change of quality of service within the session. The policy control enforcement function receives and applies the modified policy charging and control rules for the ongoing session.

Thus, the invention does not necessitate architecture changes. The invention can be carried out by minor extensions in the protocols supporting Gx and Gy interfaces either in an existing Attribute Value Pairs or in dedicated Attribute Value Pairs. A great variety of upgrades or downgrades of the Qos can be dynamically triggered by a real time study of a user's account balance. The invention requires only minor modifications of the PCEF, OCS and PCRF. Thus, the invention does not incur a major cost increase or a lengthy standardization process. The quality of service level can be considered as dynamically changed if said changes are carried out on an ongoing communication session.

Figure 2 illustrates a signal flow between a UE and PCC entities according to a process common to several embodiments of the invention. This process corresponds to the initiation of the session and is known per se by someone skilled in the art. This 'A' process comprises steps 201 to 210.

At step 201, the user equipment (UE) initiates a session request to the Policy Control Enforcement Function (PCEF). At step 202, the PCEF sends a Gx CC request to the PCRF, requesting Policy and Charging rules.

At step 203, the PCRF derives PCC rules with Qos to be applied. The PCC rules are derived based on the network input provided by the PCEF, and possibly based on the AF input through the Rx interface and/or based on the SPR input through the Sp interface.

At step 204, the PCRF sends a Gx CC answer to the PCEF including the PCC rules with Qos to be applied. At step 205, the PCEF installs the PCC rules provided by the PCRF.

At step 206, the PCEF requests units to the OCS for the rating groups (RG) (corresponding to a charging key or charging parameters for a set of users and services) associated with these PCC rules, by sending a Gy CC Request.

At step 207, the OCS controls the user's account for the service in use and reserves units for the corresponding rating groups.

At step 208, the OCS grants units to the PCEF by sending a Gy CC Answer. At step 209, the PCEF enforces the installed PCC rules and establishes the communication session of the UE.

At step 210, the session continues with the installed PCC rules and the PCEF controls the consumed credits and regularly requests more units to the OCS.

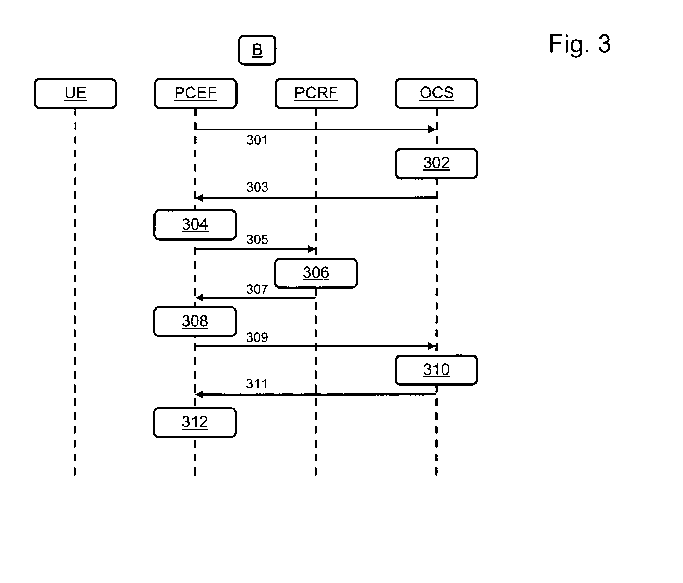

Figure 3 illustrates a signal flow between a UE and PCC entities according to a process for dynamically modifying the Qos in case of a predictable event. The predictable event of this example is a credit shortage on the user's account, due to the progressive credit consumption. This 'B' process comprises steps 301 to 312 and takes place after the 'A' process detailed above.

At step 301, during the communication session of the UE, the PCEF requests additional units to the OCS through a Gy CC Request. At step 302, the OCS detects that the remaining units reserved for the session have reached a credit threshold in the user's account with the current Qos/bandwidth usage. The OCS generates corresponding dedicated instructions for changing the Qos/bandwidth beyond these remaining reserved units. The credit threshold can be set either for a pre-paid or a post-paid user's account.

At step 303, the OCS grants remaining reserved units to the PCEF and sends the generated instructions to the PCEF. At step 304, the remaining reserved units are consumed by continuing the communication session.

At step 305, the PCEF notifies the PCRF that the user's credit for the installed PCC rules is exhausted. The PCEF forwards the instructions generated by the OCS to the PCRF through a Gx CC Request. At step 306, the PCRF dynamically derives updated PCC rules with Qos to be applied further to the credit exhaustion. The updated PCC rules are derived based on the instructions forwarded by the PCEF and based on the network input provided by the PCEF. The internal rules of the PCRF can also be taken into account, and/or the AF input through the Rx interface and/or the SPR input through the Sp interface.

At step 307, The PCRF sends a Gx CC answer to the PCEF including the updated PCC rules with Qos to be applied. At step 308, the PCEF installs the updated PCC rules provided by the PCRF.

At step 309, the PCEF requests units to the OCS for the rating groups (RG) associated with these updated PCC rules, by sending a Gy CC Request.

At step 310, the OCS controls the user's account for the service in use and reserves units for the corresponding rating groups associated to the updated PCC rules.

At step 311, the OCS grants units to the PCEF by sending a Gy CC Answer. At step 312, the PCEF enforces the installed updated PCC rules and continues the communication session of the UE.

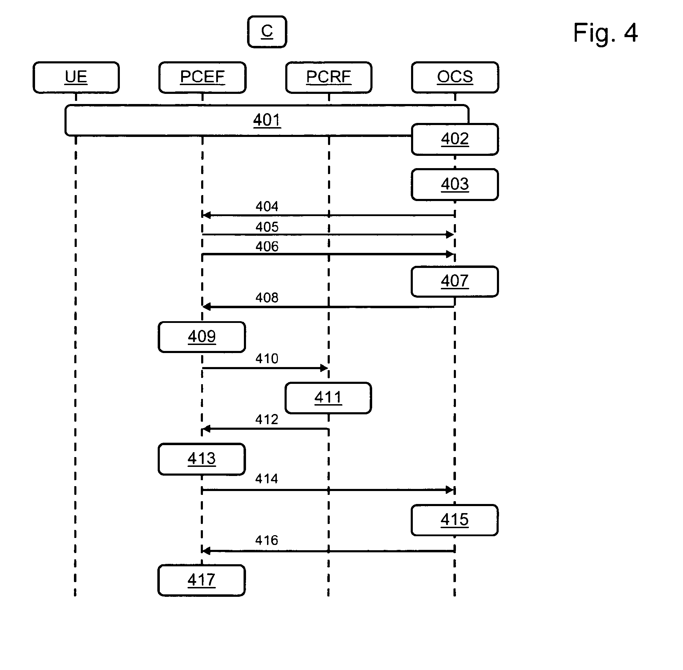

Figure 4 illustrates a signal flow between a UE and PCC entities according to a process for dynamically modifying the Qos in case of a non predictable event. For instance, as illustrated in the following example, the Qos can be upgraded once a user's account has been replenished or if an additional quota was bought. The Qos can also be downgraded if a problem is unpredictably identified with the client's account. This 'C' process comprises steps 401 to 416 and takes place after the 'A' process detailed above.

At step 401, a session is ongoing with previously installed PCC rules. The PCEF controls the consumed credits and regularly requests more units to the OCS.

At step 402, the user's account undergoes a change. At step 403, the OCS identifies that account change as an event that should modify the Qos/bandwidth applied to the communication session. For instance, the OCS can determine that a user account has been replenished or that the user has bought additional quota. For such events, the OCS determines that the Qos/bandwidth applied shall be upgraded.

At step 404, the OCS sends a Gy Re-authorization request to the PCEF. At step 405, the PCEF answers this Re-authorization request.

At step 406, the PCEF requests units to the OCS for the current rating groups (RG), by sending a Gy CC Request.

At step 407, the OCS determines that the user's account is such that the session shall be continued with improved Qos/bandwidth.

At step 408, the OCS informs the PCEF that an account threshold for the current Qos/bandwidth usage has been reached. The OCS generates corresponding dedicated instructions for changing the Qos/bandwidth to be applied next.

At step 409, the PCEF finds that no more quota are allocated.

At step 410, the PCEF notifies the PCRF that the quota for the installed PCC rules is exhausted. The PCEF forwards the instructions generated by the OCS to the PCRF through a Gx CC Request.

At step 411, the PCRF dynamically derives updated PCC rules with an upgraded Qos to be applied further to the account changes. The updated PCC rules are derived based on the instructions forwarded by the PCEF and based on the network input provided by the PCEF. As in the 'B' process, the internal rules of the PCRF can also be taken into account, and/or the AF input and/or the SPR input.

At step 412, the PCRF sends a Gx CC answer to the PCEF including the updated PCC rules with upgraded Qos to be applied. At step 413, the PCEF installs the updated PCC rules provided by the PCRF.

At step 414, the PCEF requests units to the OCS for the rating groups associated with these updated 1'CC rules, by sending a Gy CC Request.

At step 415, the OCS controls the user's account for the service in use and reserves units for the corresponding rating groups associated to the updated PCC rules.

At step 416, the OCS grants units to the PCEF by sending a Gy CC Answer. At step 417, the PCEF enforces the installed updated PCC rules and continues the communication session of the UE.

Each communication session can combine several services or several media flows within a same session. Within a session, each service or media flow can have its Qos changed independently from the other services or media flows. For instance, the Qos for a voice flow can be modified in parallel or at a different timing than the Qos for a video flow depending on the OCS decision.

The instructions generated by the OCS are interpretable by the OCS, the PCEF and the PCRF. These instructions can be high level descriptions of requested Qos/bandwidth changes, so they can be interpreted from a subscription and rating perspective by the OCS and/or from a network bearer characteristic perspective by the PCRF. Thus, different upgraded/downgraded modes are dynamically available for a given session when charging events occur on a user's account.

The OCS decision to modify the Qos of the previous examples is based on an event detection on a user's account. However, other parameters can also be taken into account to trigger the OCS decision. Such parameters can be internal rules of the OCS related to subscribers, the subscriber's profile, or the volume consumed by the user during a given period.

As illustrated in the architecture of figure 1 the PCRF can collect network information from the BBERF or from the PCEF, service related information from the AF or subscription related information from the SPR. The PCRF can take this information into account to generate or update PCC rules with Qos to be applied.

The invention is applicable to any 3GPP compliant mobile packet communication network. For instance, the invention can apply as to GPRS, UMTS or LTE communication networks.

## Claims

1. Method for dynamically controlling the quality of service(s) attributed for the communication session of a user equipment (UE) in a 3GPP compliant communication network, comprising the steps of:
- initiating a communication session on said communication network;
- an online charging system (OCS) of said network decides that a change of parameters of the quality of service attributed to the user shall take place;
- the online charging system sends (303) a change of quality of service instruction to be applied, to a policy control enforcement function (PCEF) of said network;
- the policy control enforcement function (PCEF) forwards said instruction to a policy and charging rules function (PCRF) of said network;
- said policy and charging rules function (PCRF) derives modified policy charging and control rules from forwarded instruction for change of quality of service within the session ;
- said policy control enforcement function (PCEF) receives and applies said modified policy charging and control rules for said session.

2. Method according to claim 1, wherein the online charging system detects an event (302) on the account of the user of said session, said decision step being triggered by the detection step.

3. Method according to claim 2, wherein said detected event is that the user's account is inferior to a predetermined threshold, and wherein said instruction is a request for downgrading the quality of service within the session.

4. Method according to claim 3, wherein the online charging system (OCS) grants credit units remaining on said user's account to said policy control enforcement function (PCEF) along with the sending of the change of quality of service instruction to be applied after the consumption of the final granted units.

5. Method according to claim 4, wherein said policy control enforcement function (PCEF) forwards said instruction only once the granted credit units are exhausted.

6. Method according to claim 2, wherein said detected event is a replenishing of the user's account, and wherein said instruction is a request for upgrading the quality of service within the session.

7. Method according to any one of the preceding claims, wherein the online charging system (OCS) requests said policy control enforcement function to re-authorize for current quota, before sending said change of quality of service instruction to it.

8. Method according to any one of the preceding claims, wherein the change of quality of service instruction is sent on a Gy interface between the OCS and the PCEF.

9. Method according to any one of the preceding claims, wherein the change of quality of service instruction is forwarded on a Gx interface between the PCEF and the PCRF.

10. System for a 3GPP compliant communication network, **characterized in that** it comprises:
- an online charging system (OCS) adapted to decide that a change of parameters of the quality of service attributed to the user should take place, and adapted to send a change of quality of service instruction;
- a policy and charging rules function (PCRF) adapted to derive modified policy charging and control rules from instruction sent by the online charging system, for a change of quality of service within the session;
- a policy control enforcement function (PCRF) having a communication interface with the policy and charging rules function (PCRF) and having a communication interface with the online charging system (OCS), said policy control enforcement function being adapted to receive a change of quality of service instruction from the online charging system and to forward it to said policy and charging rules function, and adapted to receive and apply modified policy charging and control rules sent by the policy and charging rules function in order to provide the quality of service attributed within an ongoing communication session of said user.

11. System according to claim 10, wherein the online charging system is adapted to detect an event (302) on the account of the user of said session, and adapted to decide said change of parameters based on the detection step.
